# NOUVEAU FASCICULE DE BREVET EUROPEEN

(11) **EP 2 330 162 B2**
(45) Date de publication et mention de la décision concernant l'opposition: **15.12.2021**
(45) Mention de la délivrance du brevet: 01.05.2013
(21) Numéro de dépôt: 09015129.1
(22) Date de dépôt: 07.12.2009
(51) Int. Cl.: C09C 1/02, C09C 1/36, C09C 1/40, B02C 23/06, B03B 1/04

(54) **Procédé de classification de matière minérale en présence d'additifs contenant du glycérol, produits obtenus et leurs utilisations**
Klassifizierungsverfahren von mineralischem Material in Gegenwart von Zusatzstoffen, die Glycerol enthalten, erhaltene Produkte und ihre Verwendungen
Method for classifying mineral material in the presence of additives containing glycerol, products obtained and uses thereof

(43) Date de publication de la demande: 08.06.2011
(73) Titulaire: Omya Development AG, 4665 Oftringen (CH)
(72) Inventeur: Gane, Patrick A.C., 4852 Rothrist (CH); Buri, Matthias, 4852 Rothrist (CH)
(74) Mandataire: Plougmann Vingtoft a/s

(56) Documents cités:
- WO-A1-2006/100510
- WO-A2-2007/109328
- FR-A1- 2 896 171
- US-A- 4 204 877

## Description

L'industrie minéralière est une grande consommatrice de produits chimiques. Ceux-ci sont utilisés dans les différentes étapes de transformation/modification/traitement que subissent les matières minérales. Une étape de classification de matière minérale selon la taille des particules, qui dépend en partie du degré de dispersion de la matière minérale dans un milieu gazeux, et dont le carbonate de calcium naturel représente un exemple privilégié de part ses multiples utilisations, constitue l'une de ces étapes.

L'homme du métier chargé de mettre en œuvre une étape de classification de matière minérale dans un classificateur à air sait qu'une classification inefficace réduit nettement la productivité de son procédé global. Notamment, lorsque les particules à classer sont fines, de l'ordre du micron, ces particules ont tendance à s'associer dans l'environnement hydrophobe que représente l'air, formant ainsi des agglomérats. De tels agglomérats risquent d'être classifier avec les particules de taille équivalente à la taille de l'agglomérat, et non pas avec les particules de taille équivalente aux particules primaires formant l'agglomérat. L'homme du métier reste donc à la recherche d'additifs qui peuvent augmenter l'efficacité de classification, notamment en évitant le phénomène d'agglomération, tout en permettant la mise en œuvre du produit classifié dans divers environnements, tel que par exemple les environnements hydrophiles.

L'US 6,139,960 fait référence à une méthode de fabrication de cendre volante, passant par une étape de classification dans un classificateur à air, les cendres volantes fines de diamètre moyen entre 0.1 et 5 microns pouvant être prétraitées par un silane, un stéarate, un aluminate, un titanate ou un zirconate.

De tels additifs rendant hydrophobe ne représentent pas une solution pour l'homme du métier qui cherche un additif qui permet, suite à l'étape de classification, la mise en œuvre de la matière classifiée dans un environnement aqueux.

Le document FR 2 896 171 fait référence à un procédé de préparation d'au moins une matière minérale et/ou d'au moins un pigment, comprenant us carbonate de calciuum rendu à la fois partiellement organophile et partiellement hydrophile.

Le document WO 2006/100510 décrit une dispersion d'un matériau inorganique particulaire comprenant un milieu liquide non-aqueux contenant un matériau inorganique particulaire qui est dispersé, et une quantité efficace d'un ou plusieurs agent(s) dispersant(s) qui a pour but de maintenir le matériau inorganique particulaire en dispersion dans le milieu non-aqueux, dans lequel le matériau inorganique présente une taille moyenne de particule (d₅₀) inférieure à environ 9 microns.

De plus, dans la thèse intitulée « Dispergierung von feinen Partikelfraktionen in Gasströmungen-Einfluss von Dispergierbeanspruchung und oberfächenmodifizierenden Zusätzen » de Sabine Niedballa (1999, Fakultät für Maschinenbau, Verfahrens- und Energietechnik der Technischen Universität Bergakademie Freiberg), il est remarqué que dans le cas de particule primaire présentant un diamètre inférieur à un micromètre, les additifs de type acide gras n'influent pas sur le degré de dispersion de particules fines de carbonate de calcium dans l'air.

Face a ce problème et de manière surprenante, la Demanderesse a su identifier un procédé de classification de matière minérale qui répond à ces divers besoins de l'homme du métier, c'est-à-dire qui augmente l'efficacité de classification à air ou qui implique une énergie de classification spécifique réduite par rapport à une classification à air sans additif, tout en obtenant une matière minérale classifiée compatible avec une application en milieu aqueux.

Ce procédé consiste en un procédé de classification de matière minérale, caractérisé en ce que ledit procédé met en œuvre les étapes suivantes :
a) fournir au moins une matière minérale consistant en carbonate de calcium ;
b) fournir au moins un additif d'aide à la classification consistant en glycérol, sous forme aqueuse ou pure ;
c) contacter, en une ou plusieurs fois, la matière minérale de l'étape a) avec l'additif d'aide à la classification de l'étape b) dans une ou plusieurs étapes de broyage à sec et / ou de mélange à sec ;
d) effectuer au moins une étape de classification à sec de la matière minérale obtenue suivant l'étape c) dans un environnement gazeux, afin d'obtenir au moins deux fractions de particules de tailles de particule moyennes différentes ;
e) éventuellement répéter les étapes c) et / ou d) sur tout ou partie de la matière minérale classifiée issue de l'étape d),
et caractérisé en ce que ladite matière minérale a un diamètre moyen, mesuré par un Sedigraph^{™} 5100, compris entre 1 µm et 10 µm, à l'alimentation du classificateur à air à l'étape d).

Par énergie de classification spécifique, on désigne la quantité d'énergie totale exprimée en kWh et nécessaire pour classifier une tonne de carbonate de calcium sec.

Le glycérol est connu comme additif de broyage, tel que décrit dans la thèse intitulée « Compréhension des mécanismes physico-chimiques intervenant lors du broyage à sec du carbonate de calcium en présence d'agent de broyage » de Mathieu Skrzypczak (Ecole Centrale de Lyon, 2009). Or, tel que démontré dans les exemples ci-dessous, il s'avère que des agents de broyage typiquement mis en œuvre dans l'industrie minière, tel que le polyéthylène glycol (PEG), mènent à une classification inefficace. De plus, cette thèse indique que le broyage à sec de particules fines, de 0 à 10 µm, en présence de glycérol est inefficace (selon la Figure IV-4), ce qui suggère d'ailleurs à l'homme du métier qu'il y a peu d'interaction entre le glycérol et les particules fines. Rien donc ne menait l'homme du métier chargé de sélectionner un agent d'aide à la classification de chercher une solution parmi les agents d'aide au broyage, et notamment parmi les agents d'aide au broyage inefficaces.

Un premier objet de la présente invention réside en un procédé de classification de matière minérale, caractérisé en ce que ledit procédé met en œuvre les étapes suivantes :
a) fournir au moins une matière minérale consistant en carbonate de calcium ;
b) fournir au moins un additif d'aide à la classification
   (i) consistant en glycérol, sous forme aqueuse ou pure, ou
   (ii) consistant en glycérol avec un ou plusieurs des agents suivants : l'éthylène glycol, le mono-propylène glycol, le triéthylène glycol, un acide inorganique ou un sel d'acide inorganique, l'acide formique ou citrique ou un sel d'acide formique ou citrique, un polyacide organique ou un sel de polyacide organique, une alcanolamine, une polyéthylèneimine, un polymère polyalkylène glycol de masse moléculaire en poids comprise entre 200 g/mole et 20000 g/mole préférentiellement entre 600 g/mole et 6000 g/mole, un glucide ayant une racine moyenne au carré du rayon de giration égale ou inférieure au rayon modal de la matière minérale, un ou plusieurs poly-glycérols, le ou lesdits agents étant sous forme aqueuse ou pure,
c) contacter, en une ou plusieurs fois, la matière minérale de l'étape a) avec l'additif d'aide à la classification de l'étape b) dans une ou plusieurs étapes de broyage à sec et / ou de mélange à sec ;
d) effectuer au moins une étape de classification de la matière minérale obtenue suivant l'étape c) dans un environnement gazeux, afin d'obtenir au moins deux fractions de particules de tailles de particule moyennes différentes ;
e) éventuellement répéter les étapes c) et / ou d) sur tout ou partie de la matière minérale classifiée issue de l'étape d) ),
et caractérisé en ce que ladite matière minérale a un diamètre moyen, mesuré par un Sedigraph^{™} 5100, compris entre 1 µm et 10 µm, à l'alimentation du classificateur à air à l'étape d).

Dans une variante préférentielle, ce procédé est caractérisé en ce que les tailles de particule moyenne desdites fractions de particules obtenues à l'étape d) diffèrent d'au moins 0.1 µm entre elles.

Dans une autre variante préférentielle, ce procédé est caractérisé en ce que lorsque les fractions sont obtenues à l'étape d), les tailles de particule moyennes desdites fractions présentent un rapport de 1 :1.05 à 1 :150, et préférentiellement de 1 :1.1 à 1 :1.15.

Ce procédé peut être décliné en 3 variantes, selon la forme et la nature de l'additif :
- première variante : du glycérol sous forme pure
- deuxième variante : du glycérol en formulation aqueuse
- troisième variante : du glycérol en combinaison avec au moins un des composés énoncés au point (ii), sous forme aqueuse ou pure.

Selon cette première variante, ledit additif consiste en du glycérol sous forme pure.

Dans la deuxième variante, ledit additif consiste en eau et glycérol. Selon cette deuxième variante lorsque ledit additif consiste en eau et glycérol, il contient préférentiellement de 25 % à 95 %, plus préférentiellement de 45 % à 90 %, et très préférentiellement de 75 % à 85 % en poids de glycérol par rapport à leur poids total, le complément étant constitué par l'eau.

Dans la troisième variante, ledit additif consiste en glycérol avec un ou plusieurs des agents suivants : l'éthylène glycol, le mono-propylène glycol, le triéthylène glycol, un acide inorganique ou un sel d'acide inorganique, l'acide formique ou citrique ou un sel d'acide formique ou citrique, un polyacide organique ou un sel de polyacide organique, une alcanolamine, une polyéthylèneimine, un polymère polyalkylène glycol de masse moléculaire en poids comprise entre 200 g/mole et 20000 g/mole préférentiellement entre 600 g/mole et 6000 g/mole, un glucide ayant une racine moyenne au carré du rayon de giration égale ou inférieure au rayon modal de la matière minérale, un ou plusieurs poly-glycérols, le ou lesdits agents étant sous forme aqueuse ou pure.

Selon cette troisième variante, ledit acide inorganique est préférentiellement un acide phosphorique.

Selon cette troisième variante, ledit sel d'acide inorganique est préférentiellement un sel mono-, di- ou tri-alcalin, et préférentiellement est un sel de cation du Groupe I ou II du Tableau Périodique des Eléments.

Selon cette troisième variante, ledit sel d'acide formique ou citrique est préférentiellement un sel mono-, di- ou tri-alcalin, et plus préférentiellement est un sel de cation du Groupe I ou II du Tableau Périodique des Eléments.

Selon cette troisième variante, ledit polyacide organique est préférentiellement de formule COOH-(CH₂)ₙ-COOH, ou n est un entier de valeur entre 0 et 7, inclusif, ou est un sel mono- ou di-alcalin du polyacide organique de formule COOH-(CH₂)ₙ-COOH, ou n est égal à un entier de valeur entre 0 et 7 inclusif, ou est un polyacide organique polymérique d'un ou plusieurs des monomères suivants, sous forme acide ou partiellement ou entièrement neutralisé avec un ou plusieurs cations du Groupe I ou II du Tableau Périodique des Eléments: acrylique, méthacrylique, maléique ou itaconique, et préférentiellement est un acide oxalique, un acide pimélique, ou un acide adipique.

Selon cette troisième variante, ladite alcanolamine est préférentiellement choisie parmi le 2-amino-2-méthyle-1-propanol, le 2-amino-2-ethyle-1,3-propanediol, la tri-éthanolamine, la N-butyldiéthanolamine et la tri-iso-propanolamine, neutralisées ou non, et est plus préférentiellement choisie parmi leurs formes neutralisées au moyen d'un sel d'acide formique ou citrique ou d'un sel de polyacide organique selon la revendication 10.

Selon cette troisième variante, ledit polymère polyalkylène glycol est préférentiellement un polyéthylène glycol, un polypropylène glycol, ou un copolymère éthylène-propylène glycol, aléatoire ou bloc.

Selon cette troisième variante, ledit glucide ayant une racine moyenne au carré du rayon de giration dudit glucide égale ou inférieure au rayon modal de la matière minérale est préférentiellement le glucose, le fructose, le sucrose, l'amidon ou la cellulose, et plus préférentiellement est le sucrose.

Selon cette troisième variante, le ou les poly-glycérols sont préférentiellement choisis parmi le di-glycérol, tri- glycérol, tétra- glycérol, penta-glycérol, hexa-glycérol, hepta-glycérol, octa-glycérol, nona-glycérol et déca-glycérol et leurs mélanges et plus préférentiellement parmi le di- et tri-glycérol.

Selon cette troisième variante, ledit additif contient préférentiellement de 20 % à 95 % en poids de glycérol, de 1 % à 50 % en poids dudit agent et de 0 % à 65 % en poids d'eau, plus préférentiellement de 30 % à 90 % en poids de glycérol, de 10 % à 45 % en poids dudit agent et de 0 % à 60 % en poids d'eau, très préférentiellement de 35 % à 75 % en poids de glycérol, de 30 % à 40 % en poids dudit agent et de 5 % à 50 % en poids d'eau par rapport à leur poids total, la somme des pourcentages en poids de glycérol, dudit agent et d'eau étant à chaque fois égale à 100 %.

Dans le procédé de l'invention, il est préférentiel de mettre en œuvre de 100 à 5 000 ppm, plus préférentiellement de 500 à 3 000 ppm de glycérol par rapport au poids sec de ladite matière minérale.

Dans une autre variante du procédé selon l'invention, il est préférentiel de mettre en œuvre entre 0,1 et 1 mg, et plus préférentiellement entre 0,2 et 0,6 mg, équivalent sec total dudit glycérol et tout éventuel agent par m² de matière minérale.

Ladite matière minérale mise en œuvre dans le procédé de l'invention a un diamètre moyen, mesuré par un Sedigraph^{™} 5100, compris entre 1 µm et 10 µm, à l'alimentation du classificateur à air à l'étape d).

Ladite matière minérale mise en œuvre dans le procédé de l'invention a préférentiellement un pourcentage en poids de particules ayant un diamètre inférieur à 2 µm, mesuré par un Sedigraph^{™} 5100, compris entre 5 % et 90 %, et plus préférentiellement entre 10 % et 60 % à l'alimentation du classificateur à air à l'étape d).

Ladite matière minérale de l'étape a) est carbonate de calcium, et préférentiellement carbonate de calcium naturel.

Ladite classification à air de l'étape d) du procédé selon l'invention est préférentiellement une classification sur tamis et / ou par cyclone.

L'étape d) peut comprendre au moins deux étapes de classifications effectuées en série ou en parallèle, et préférentiellement comprend de trois à dix étapes de classifications.

Le procédé de l'invention est préférentiellement un procédé continu.

L'invention réside également en un produit obtenu par le procédé de l'invention. Un tel produit peut avantageusement être utilisé en peinture, en plastique, en application alimentaire à destination humaine ou animale, en formulation pharmaceutique, en masse papetière ou en couchage papetier.

### EXEMPLES

### Exemple 1

Cet exemple est relatif à une classification à air d'un carbonate de calcium naturel qui est un marbre de Carrare. L'additif décrit au Tableau 2 est mis en œuvre lors d'une étape préalable de broyage.

La distribution de taille des particules du carbonate de calcium initial alimentant le broyeur, obtenu par pré-broyage dans un broyeur à marteau, est donnée dans le tableau 1.

**Tableau 1**

| **Diamètre des particules (mm)** | **% massique** |
|---|---|
| 4 - 2,5 | 7,25 |
| 2,5 - 1,6 | 9,73 |
| 1,6 - 0,8 | 11,44 |
| 0,8 - 0,5 | 5,57 |
| 0,5 - 0,2 | 23,73 |
| 0,2 - 0,1 | 23,18 |
| < 0,1 | 19,1 |

Le marbre de Carrare a été introduit dans un broyeur à boulets de 5,7m³ utilisant 8 tonnes de billes de broyage en fer Cylpeb^{™}, en forme de cylindres, ayant un diamètre moyen de 16 mm, en vue d'obtenir un matériau broyé :
- ayant un diamètre médian inférieur ou égal à 1,8 µm,
- dont 55 % en poids des particules ont un diamètre inférieur ou égal à 2 µm.

Le broyage à sec est réalisé de manière continue.

En sortie de la chambre de broyage, le matériau broyé est mené jusqu'à un classificateur de type SELEX^{™} 6S. Sa vitesse de rotation et son débit d'air sont respectivement réglés à 5200 tours/min et 6000 m³/h de façon à sélectionner la fraction de particules ayant un diamètre moyen inférieur ou égal à une valeur donnée et qui constituera le produit fini ; la fraction de particules restantes ayant un diamètre moyen supérieur à cette valeur est réintroduite dans le broyeur à boulets.

Le broyage est réalisé de telle manière à ce que le débit d'alimentation du sélecteur soit toujours égal à 4 tonnes/h et à ce que la quantité de produit frais injecté dans le broyeur à boulets corresponde à la quantité de produit sélectionné quittant le système. Les agents d'aide à la classification à sec ont été introduits dans le système de broyage au niveau du point d'introduction du matériau frais de manière à maintenir une quantité constante d'agent d'aide au broyage par rapport au matériau frais introduit à broyer.

**Tableau 2**

| Essai n° | 1 Art antérieur | 2 Invention | 3 Invention |
|---|---|---|---|
| Type d'agent | PEG | Glycérol | Glycérol + H3PO4 |
| Energie spécifique de classification (kWh/t) | 172 | 160 | 171 |
| % de particules de diamètre < 2µm | 57 | 57 | 58 |
| % de particules de diamètre < 1 µm | 21 | 23 | 23 |
| d50 (µm) | 1,8 | 1,7 | 1,7 |
| Surface spécifique BET (m²/g) | 6,9 | 6,9 | 7,2 |
| Energie spécifique de classification par m² de produit (kWh/(t. m²)) | 24,9 | 23,2 | 23,7 |

Les agents référencés PEG consistent en une solution aqueuse contenant 75 % (massique) de polyéthylène glycol de masse moléculaire en poids égale à 600 g/mole et ont été obtenus auprès de la société FLUKA^{™}.

Glycérol désigne une solution aqueuse contenant 75 % (massique) de glycérol.

Glycérol + H3PO4 désigne une solution aqueuse contenant 75 % (massique) d'un mélange (99 / 1 massique) Glycérol / acide phosphorique.

Chacun des essais met en œuvre 2000 ppm de produit actif (soit 2667 ppm de chaque solution aqueuse).

Quant au niveau de la performance de classification, on constate que les meilleurs résultats sont obtenus pour les essais 2 et 3.

## Revendications

1. Procédé de classification de matière minérale, **caractérisé en ce que** ledit procédé met en œuvre les étapes suivantes :
a) fournir au moins une matière minérale consistant en carbonate de calcium ;
b) fournir au moins un additif d'aide à la classification
(i) consistant en glycérol, sous forme aqueuse ou pure, ou
(ii) consistant en glycérol avec un ou plusieurs des agents suivants : l'éthylène glycol, le mono-propylène glycol, le triéthylène glycol, un acide inorganique ou un sel d'acide inorganique, l'acide formique ou citrique ou un sel d'acide formique ou citrique, un polyacide organique ou un sel de polyacide organique, une alcanolamine, une polyéthylèneimine, un polymère polyalkylène glycol de masse moléculaire en poids comprise entre 200 g/mole et 20000 g/mole préférentiellement entre 600 g/mole et 6000 g/mole, un glucide ayant une racine moyenne au carré du rayon de giration égale ou inférieure au rayon modal de la matière minérale, un ou plusieurs poly-glycérols, le ou lesdits agents étant sous forme aqueuse ou pure,
c) contacter, en une ou plusieurs fois, la matière minérale de l'étape a) avec l'additif d'aide à la classification de l'étape b) dans une ou plusieurs étapes de broyage à sec et / ou de mélange à sec ;
d) effectuer au moins une étape de classification de la matière minérale obtenu suivant l'étape c) dans un environnement gazeux, afin d'obtenir au moins deux fractions de particules de tailles de particule moyennes différentes ;
e) éventuellement répéter les étapes c) et / ou d) sur tout ou partie de la matière minérale classifiée issue de l'étape d),
et **caractérisé en ce que** ladite matière minérale a un diamètre moyen compris entre 1 µm et 10 µm, à l'alimentation du classificateur à air à l'étape d).

2. Procédé, selon la revendication 1, **caractérisé en ce que** les tailles de particule moyenne desdites fractions de particules obtenues à l'étape d) diffèrent d'au moins 0.1 µm entre elles.

3. Procédé, selon la revendication 1, **caractérisé en ce que** lorsque les fractions sont obtenues à l'étape d), les tailles de particule moyennes desdites fractions présentent un rapport de 1 :1.05 à 1 :150, et préférentiellement de 1 :1.1 à 1 :1.15.

4. Procédé, selon l'une des revendications 1 à 3, **caractérisé en ce que** ledit additif consiste en du glycérol sous forme pure ou en eau et glycérol.

5. Procédé, selon la revendication 4, **caractérisé en ce que** lorsque ledit additif consiste en eau et glycérol, il contient de 25 % à 95 %, préférentiellement de 45 % à 90 %, très préférentiellement de 75 % à 85 % en poids de glycérol par rapport à leur poids total, le complément étant constitué par l'eau.

6. Procédé, selon l'une des revendications 1 à 3, **caractérisé en ce que** ledit additif consiste en glycérol avec un ou plusieurs des agents suivants : l'éthylène glycol, le mono-propylène glycol, le triéthylène glycol, un acide inorganique ou un sel d'acide inorganique, l'acide formique ou citrique ou un sel d'acide formique ou citrique, un polyacide organique ou un sel de polyacide organique, une alcanolamine, une polyéthylèneimine, un polymère polyalkylène glycol de masse moléculaire en poids comprise entre 200 g/mole et 20000 g/mole préférentiellement entre 600 g/mole et 6000 g/mole, un glucide ayant une racine moyenne au carré du rayon de giration égale ou inférieur au rayon modal de la matière minérale, un ou plusieurs poly-glycérols, le ou lesdits agents étant sous forme aqueuse ou pure.

7. Procédé, selon la revendication 6, **caractérisé en ce que** ledit acide inorganique est un acide phosphorique.

8. Procédé, selon la revendication 6, **caractérisé en ce que** ledit sel d'acide inorganique est un sel mono-, di- ou tri-alcalin, et préférentiellement est un sel de cation du Groupe I ou II du Tableau Périodique des Eléments.

9. Procédé, selon la revendication 6, **caractérisé en ce que** ledit sel d'acide formique ou citrique est un sel mono-, di- ou tri-alcalin, et préférentiellement est un sel de cation du Groupe I ou II du Tableau Périodique des Eléments.

10. Procédé, selon la revendication 6, **caractérisé en ce que** ledit polyacide organique est de formule COOH-(CH₂)ₙ-COOH, ou n est un entier de valeur entre 0 et 7, inclusif, ou est un sel mono- ou di-alcalin du polyacide organique de formule COOH-(CH₂)ₙ-COOH, ou n est égal à un entier de valeur entre 0 et 7 inclusif, ou est un polyacide organique polymérique d'un ou plusieurs des monomères suivants, sous forme acide ou partiellement ou entièrement neutralisé avec un ou plusieurs cations du Groupe I ou II du Tableau Périodique des Eléments: acrylique, méthacrylique, maléique ou itaconique, et préférentiellement est un acide oxalique, un acide pimélique, ou un acide adipique.

11. Procédé, selon la revendication 6, **caractérisé en ce que** ladite alcanolamine est choisie parmi le 2-amino-2-méthyle-1-propanol, le 2-amino-2-ethyle-1,3-propanediol, la tri-éthanolamine, la N-butyldiéthanolamine et la tri-iso-propanolamine, neutralisées ou non, et est préférentiellement choisie parmi leurs formes neutralisées au moyen d'un sel d'acide formique ou citrique ou d'un sel de polyacide organique selon la revendication 10.

12. Procédé, selon la revendication 6, **caractérisé en ce que** ledit polymère polyalkylène glycol est un polyéthylène glycol, un polypropylène glycol, ou un copolymère éthylène-propylène glycol, aléatoire ou bloc.

13. Procédé, selon la revendication 6, **caractérisé en ce que** ledit glucide ayant une racine moyenne au carré du rayon de giration dudit glucide égale ou inférieure au rayon modal de la matière minérale est le glucose, le fructose, le sucrose, l'amidon ou la cellulose, et préférentiellement est le sucrose.

14. Procédé selon la revendication 6, **caractérisé en ce que** le ou les poly-glycérols sont choisis parmi le di-glycérol, tri-glycérol, tétra-glycérol, penta-glycérol, hexa-glycérol, hepta-glycérol, octa-glycérol, nona-glycérol et déca-glycérol et leurs mélanges et préférentiellement parmi le di- et tri-glycérol.

15. Procédé, selon l'une des revendications 6 à 14, **caractérisé en ce que** ledit additif contient de 20 % à 95 % en poids de glycérol, de 1 % à 50 % en poids dudit agent et de 0 % à 65 % en poids d'eau, préférentiellement de 30 % à 90 % en poids de glycérol, de 10 % à 45 % en poids dudit agent et de 0 % à 60 % en poids d'eau, très préférentiellement de 35 % à 75 % en poids de glycérol, de 30 % à 40 % en poids dudit agent et de 5 % à 50 % en poids d'eau par rapport à leur poids total, la somme des pourcentages en poids de glycérol, dudit agent et d'eau étant à chaque fois égale à 100 %.

16. Procédé, selon l'une des revendications 1 à 15, **caractérisé en ce qu'**on met en œuvre, de 100 à 5 000 ppm, préférentiellement de 500 à 3 000 ppm de glycérol par rapport au poids sec de ladite matière minérale.

17. Procédé, selon l'une des revendications 1 à 16, **caractérisé en ce qu'**on met en œuvre entre 0,1 et 1 mg, et préférentiellement entre 0,2 et 0,6 mg, équivalent sec total dudit glycérol et tout éventuel agent par m² de matière minérale.

18. Procédé, selon l'une des revendications 1 à 17, **caractérisé en ce que** ladite matière minérale a un pourcentage en poids de particules ayant un diamètre inférieur à 2 µm, mesuré par un Sedigraph^{™} 5100, compris entre 5 % et 90 %, préférentiellement entre 10 % et 60 % à l'alimentation du classificateur à air à l'étape d).

19. Procédé, selon l'une des revendications 1 à 18, **caractérisé en ce que** ladite matière minérale de l'étape a) est un carbonate de calcium naturel.

20. Procédé, selon l'une des revendications 1 à 19, **caractérisé en ce que** l'étape d) de classification à air est une classification sur tamis et / ou par cyclone.

21. Procédé, selon l'une des revendications 1 à 20, **caractérisé en ce que** l'étape d) comprend au moins deux étapes de classifications effectuées en série ou en parallèle, et préférentiellement comprend de trois à dix étapes de classifications.

22. Procédé selon l'une des revendications 1 à 21, **caractérisé en ce qu'**il est un procédé continu.

## Patentansprüche

1. Verfahren zum Klassieren von Mineralstoffen, **dadurch gekennzeichnet, dass** das Verfahren die folgenden Schritte implementiert:
a) Zuführen wenigstens eines Mineralstoffes bestehend aus Calciumcarbonat;
b) Zuführen wenigstens eines Klassierungshilfsadditivs
(i) bestehend aus Glycerin, in wässriger oder in reiner Form, oder
(ii) bestehend aus Glycerin mit einem oder mehreren der folgenden Substanzen: Ethylenglycol, Monopropylenglycol, Triethylenglycol, einer anorganischen Säure oder einem Salz einer anorganischen Säure, Ameisen- oder Zitronensäure oder einem Salz der Ameisen- oder Zitronensäure, einer organischen Polysäure oder einem Salz einer organischen Polysäure, einem Alkanolamin, einem Polyethylenimin, ein Polyalkylenglycolpolymer mit einer Molekülmasse, in Gewicht, von zwischen 200 g/Mol und 20 000 g/Mol, bevorzugt zwischen 600 g/Mol und 6 000 g/Mol, einem Kohlenhydrat mit einem quadratischen Mittel des Trägheitsradius gleich oder kleiner dem modalen Radius des Mineralstoffs, einem oder mehreren Polyglycerinen, wobei die Substanz bzw. die Substanzen in wässriger oder in reiner Form sind,
c) Inkontaktbringen, einmal oder mehrmals, des Mineralstoffs aus Schritt a) mit dem Klassierungshilfsadditiv aus Schritt b) in einem oder mehreren Trockenmahl- und/oder Trockenmischschritten;
d) Durchführen wenigstens eines Klassierungsschritts des in Schritt c) erhaltenen Mineralstoffs in einer gasförmigen Umgebung, um wenigstens zwei Partikelfraktionen mit verschiedenen mittleren Partikelgrössen zu erhalten;
e) gegebenenfalls Wiederholen von Schritt c) und/oder d) an dem Gesamten oder einem Teil des klassierten Mineralstoffs, der aus Schritt d) resultiert,
und **dadurch gekennzeichnet, dass** der Mineralstoff einen mittleren Durchmesser, gemessen mittels einem Sedigraph^{™} 5100, von zwischen 1 µm und 10 µm bei der Zufuhr zum Windsichter in Schritt d) aufweist.

2. Verfahren nach Anspruch 1, **dadurch gekennzeichnet, dass** die mittleren Partikelgrössen der Partikelfraktionen, die in Schritt d) erhalten werden, um wenigstens 0,1 µm voneinander abweichen.

3. Verfahren nach Anspruch 1, **dadurch gekennzeichnet, dass** wenn die Fraktionen in Schritt d) erhalten werden, die mittleren Partikelgrössen der Fraktionen ein Verhältnis von 1:1,05 bis 1:150 aufweisen, und bevorzugt 1:1,1 bis 1:1,15.

4. Verfahren nach einem der Ansprüche 1 bis 3, **dadurch gekennzeichnet, dass** das Additiv aus Glycerin in reiner Form oder aus Wasser und Glycerin besteht.

5. Verfahren nach Anspruch 4, **dadurch gekennzeichnet, dass** wenn das Additiv aus Wasser und Glycerin besteht, es 25 Gew.-% bis 95 Gew.-%, bevorzugt 45 Gew.-% bis 90 Gew.-%, am meisten bevorzugt 75 Gew.-% bis 85 Gew.-% Glycerin bezogen auf sein Gesamtgewicht enthält, wobei der Rest aus Wasser besteht.

6. Verfahren nach einem der Ansprüche 1 bis 3, **dadurch gekennzeichnet, dass** das Additiv besteht aus Glycerin mit einem oder mehreren der folgenden Substanzen: Ethylenglycol, Monopropylenglycol, Triethylenglycol, einer anorganischen Säure oder einem Salz einer anorganischen Säure, Ameisen- oder Zitronensäure oder einem Salz von Ameisen- oder Zitronensäure, einer organischen Polysäure oder einem Salz einer organischen Polysäure, einem Alkanolamin, einem Polyethylenimin, einem Polyalkylenglycolpolymer mit einer Molekülmasse, in Gewicht, von zwischen 200 g/Mol und 20 000 g/Mol, bevorzugt zwischen 600 g/Mol und 6 000 g/Mol, einem Kohlenhydrat mit einem quadratischen Mittel des Trägheitsradius gleich oder kleiner dem modalen Radius des Mineralstoffs, einem oder mehreren Polyglycerinen, wobei die Substanz bzw. die Substanzen in wässriger oder in reiner Form sind.

7. Verfahren nach Anspruch 6, **dadurch gekennzeichnet, dass** die anorganische Säure eine Phosphorsäure ist.

8. Verfahren nach Anspruch 6, **dadurch gekennzeichnet, dass** das Salz einer anorganischen Säure ein Mono-, Di- oder Trialkalisalz ist, und ist bevorzugt ein Salz eines Kations der Gruppe I oder II des Periodensystems der Elemente.

9. Verfahren nach Anspruch 6, **dadurch gekennzeichnet, dass** das Salz der Ameisen- oder Zitronensäure ein Mono-, Di- oder Trialkalisalz ist, und ist bevorzugt ein Salz eines Kations der Gruppe I oder II des Periodensystems der Elemente.

10. Verfahren nach Anspruch 6, **dadurch gekennzeichnet, dass** die organische Polysäure die Formel COOH-(CH₂)ₙ-COOH aufweist, worin n eine ganze Zahl mit einem Wert zwischen 0 und einschließlich 7 ist, oder ist ein Mono- oder Dialkalisalz einer organischen Polysäure der Formel COOH-(CH₂)ₙ-COOH, worin n eine ganze Zahl mit einem Wert zwischen 0 und einschließlich 7 ist, oder ist eine polymere organische Polysäure aus einem oder mehreren der folgenden Monomeren, in der sauren Form, oder in der Form, die teilweise oder vollständig mit einem oder mehreren Kationen der Gruppe I oder II des Periodensystems der Elemente neutralisiert ist: Acrylsäure, Methacrylsäure, Malein- oder Itaconsäure, und ist bevorzugt Oxalsäure, Pimelinsäure oder Adipinsäure.

11. Verfahren nach Anspruch 6, **dadurch gekennzeichnet, dass** das Alkanolamin ausgewählt ist aus 2-Amino-2-methyl-1-propanol, 2-Amino-2-ethyl-1,3-propandiol, Triethanolamin, N-Butyldiethanolamin und Triisopropanolamin, neutralisiert oder nicht, und ist bevorzugt ausgewählt aus ihren Formen, die mittels einem Salz von Ameisen- oder Zitronensäure neutralisiert sind, oder mittels einem organischen Polysäuresalz gemäss Anspruch 10.

12. Verfahren nach Anspruch 6, **dadurch gekennzeichnet, dass** das Polyalkylenglycolpolymer ein Polyethylenglycol, ein Polypropylenglycol oder ein Ethylenpropylenglycolcopolymer, ob statistisch Copolymer oder Blockcopolymer, ist.

13. Verfahren nach Anspruch 6, **dadurch gekennzeichnet, dass** das Kohlenhydrat mit einem quadratischen Mittel des Trägheitsradius gleich oder kleiner dem modalen Radius des Mineralstoffs Glucose, Fructose, Saccharose, Stärke oder Cellulose ist, und ist bevorzugt Saccharose.

14. Verfahren nach Anspruch 6, **dadurch gekennzeichnet, dass** das Polyglycerin bzw. die Polyglycerine ausgewählt sind aus Diglycerin, Triglycerin, Tetragylcerin, Pentaglycerin, Hexaglycerin, Heptagylcerin, Octaglycerin, Nonaglycerin und Decaglycerin sowie ihren Gemischen, und ist bzw. sind bevorzugt ausgewählt aus Di- und Triglycerin.

15. Verfahren nach einem der Ansprüche 6 bis 14, **dadurch gekennzeichnet, dass** das Additiv enthält 20 Gew.-% bis 95 Gew.-% Glycerin, 1 Gew.-% bis 50 Gew.-% der Substanz und 0 Gew.-% bis 65 Gew.-% Wasser, bevorzugt 30 Gew.-% bis 90 Gew.-% Glycerin, 10 Gew.-% bis 45 Gew.-% der Substanz und 0 Gew.-% bis 60 Gew.-% Wasser, und besonders bevorzugt 35 Gew.-% bis 75 Gew.-% Glycerin, 30 Gew.-% bis 40 Gew.-% der Substanz und 5 Gew.-% bis 50 Gew.-% Wasser, bezogen auf ihr Gesamtgewicht, wobei die Summe der Gewichtsanteile von Glycerin, der Substanz und Wasser in jedem Fall 100 % beträgt.

16. Verfahren nach einem der Ansprüche 1 bis 15, **dadurch gekennzeichnet, dass** 100 bis 5 000 ppm, und bevorzugt 500 bis 3 000 ppm Glycerin, bezogen auf das Trockengewicht des Mineralstoffs, verwendet wird.

17. Verfahren nach einem der Ansprüche 1 bis 16, **dadurch gekennzeichnet, dass** zwischen 0,1 und 1 mg, und bevorzugt zwischen 0,2 und 0,6 mg, Gesamttrockenäquivalent, an Glycerin und allen optionalen Substanzen pro m² Mineralstoff verwendet wird.

18. Verfahren nach einem der Ansprüche 1 bis 17, **dadurch gekennzeichnet, dass** der Mineralstoff einen Gewichtsprozentanteil an Partikeln mit einem Durchmesser von kleiner 2 µm, gemessen mittels einem Sedigraph^{™} 5100, von zwischen 5% und 90%, bevorzugt zwischen 10% und 60% bei der Zufuhr zum Windsichter in Schritt d) aufweist.

19. Verfahren nach einem der Ansprüche 1 bis 18, **dadurch gekennzeichnet, dass** der Mineralstoff aus Schritt a) ein natürliches Calciumcarbonat ist.

20. Verfahren nach einem der Ansprüche 1 bis 19, **dadurch gekennzeichnet, dass** das Windsichten in Schritt d) ein Klassieren mittels Sieb ist und/oder mittels einem Fliehkraftabscheider.

21. Verfahren nach einem der Ansprüche 1 bis 20, **dadurch gekennzeichnet, dass** Schritt d) wenigstens zwei Klassierungsschritte umfasst, die in Reihe oder parallel durchgeführt werden, und umfasst bevorzugt drei bis zehn Klassierungsschritte.

22. Verfahren nach einem der Ansprüche 1 bis 21, **dadurch gekennzeichnet, dass** es ein kontinuierliches Verfahren ist.

## Claims

1. A method of sizing of mineral matter, **characterised in that** the said method implements the following steps:
a) supply at least one mineral matter consisting of calcium carbonate;
b) supply at least one sizing aid additive
(i) consisting of glycerol, in an aqueous or pure form, or
(ii) consisting of glycerol with one or more of the following agents: ethylene glycol, monopropylene glycol, triethylene glycol, an inorganic acid or an inorganic acid salt, formic or citric acid or a formic or citric acid salt, an organic polyacid or an organic polyacid salt, an alcanolamine, a poly(ethylene imine), a polyalkylene glycol polymer of molecular mass by weight of between 200 g/mole and 20,000 g/mole, preferentially between 600 g/mole and 6,000 g/mole, a carbohydrate having a root mean square of the radius of gyration equal to or less than the modal radius of the mineral matter, one or more polyglycerols, where the said agent or agents are in the aqueous or pure form,
c) bring into contact, once or several times, the mineral matter from step a) with the sizing aid additive of step b) in one or more dry grinding and/or dry blending steps;
d) undertake at least one sizing step of the mineral matter obtained in step c) in a gaseous environment, in order to obtain at least two fractions of particles of different average particle sizes;
e) possibly repeat steps c) and/or d) on all or part of the sized mineral matter resulting from step d),
and **characterised in that** the said mineral matter has an average diameter, measured by a Sedigraph^{™} 5100, of between 1 µm 10 µm, at the supply of the air classifier in step d).

2. A method, according to claim 1, **characterised in that** the average particle sizes of the said fractions of particles obtained in step d) differ by at least 0.1 µm relative to one another.

3. A method, according to claim 1, **characterised in that** when the fractions are obtained in step d) the average particle sizes of the said fractions have a ratio of 1:1.05 to 1:150, and preferentially 1:1.1 to 1:1.15.

4. A method, according to one of the claims 1 or 3, **characterised in that** the said additive consists of glycerol in the pure form or of water and glycerol.

5. A method, according to claim 4, **characterised in that** when the said additive consists of water and glycerol it contains 25% to 95%, preferentially 45% to 90%, very preferentially 75% to 85%, by weight of glycerol relative to their total weight, the remainder consisting of water.

6. A method, according to one of the claims 1 or 3, **characterised in that** the said additive consists of glycerol with one or more of the following agents: ethylene glycol, monopropylene glycol, triethylene glycol, an inorganic acid or an inorganic acid salt, formic or citric acid or a formic or citric acid salt, an organic polyacid or an organic polyacid salt, an alcanolamine, a poly(ethylene imine), a polyalkylene glycol polymer of molecular mass by weight of between 200 g/mole and 20,000 g/mole, preferentially between 600 g/mole and 6,000 g/mole, a carbohydrate having a root mean square of the radius of gyration equal to or less than the modal radius of the mineral matter, one or more polyglycerols, where the said agent or agents are in the aqueous or pure form.

7. A method, according to claim 6, **characterised in that** the said inorganic acid is a phosphoric acid.

8. A method, according to claim 6, **characterised in that** the said inorganic salt is a mono- , di- or tri-alkaline salt, and is preferentially a salt of a cation of Group I or II of the Periodic Table of the Elements.

9. A method, according to claim 6, **characterised in that** the said salt of formic or citric acid is a mono-, di- or tri-alkaline salt, and is preferentially a salt of a cation of Group I or II of the Periodic Table of the Elements.

10. A method, according to claim 6, **characterised in that** the said organic polyacid has the formula COOH-(CH₂)ₙ-COOH, in which n is an integer having a value of between 0 and 7, inclusive, or is a mono- or di-alkaline salt of the organic polyacid of formula COOH-(CH₂)ₙ-COOH, in which n is equal to an integer having a value of between 0 and 7 inclusive, or is a polymeric organic polyacid of one or more of the following monomers, in the acid form, or in the form which is partially or fully neutralised with one or more cations of Group I or II of the Periodic Table of the Elements: acrylic, methacrylic, maleic or itaconic, and is preferentially an oxalic acid, a pimelic acid or an adipic acid.

11. A method, according to claim 6, **characterised in that** the said alcanolamine is chosen from among 2-amino-2-methyl-1-propanol, 2-amino-2-ethyl-1,3-propanediol, triethanolamine, N-butyldiethanolamine and tri-iso-propanolamine, whether or not neutralised, and is preferentially chosen from among their forms which are neutralised by means of a formic or citric acid salt, or of an organic polyacid salt according to claim 10.

12. A method, according to claim 6, **characterised in that** the said polyalkylene glycol polymer is a polyethylene glycol, a polypropylene glycol, or an ethylene-propylene glycol copolymer, whether random or block.

13. A method, according to claim 6, **characterised in that** the said carbohydrate having a root mean square of the radius of gyration of the said carbohydrate equal to or less than the modal radius of the mineral matter is glucose, fructose, sucrose, starch or cellulose, and is preferentially sucrose.

14. A method, according to claim 6, **characterised in that** the polyglycerol or polyglycerols are chosen from among di-glycerol, tri-glycerol, tetra-glycerol, penta-glycerol, hexaglycerol, hepta-glycerol, octa-glycerol, nona-glycerol and deca-glycerol and their blends, and preferentially from among di- and tri-glycerol.

15. A method, according to one of the claims 6 to 14, **characterised in that** the said additive contains 20% to 95% by weight of glycerol, 1 % to 50% by weight of the said agent and 0% to 65% by weight of water, preferentially 30% to 90% by weight of glycerol, 10% to 45% by weight of the said agent and 0% to 60% by weight of water, and preferentially 35% to 75% by weight of glycerol, 30% to 40% by weight of the said agent and 5% to 50% by weight of water, relative to their total weight, where the sum of the percentages by weight of glycerol, of the said agent and of water are, in each case, equal to 100%.

16. A method, according to one of the claims 1 to 15, **characterised in that** use is made of 100 to 5,000 ppm, and preferentially 500 to 3,000 ppm, of glycerol, relative to the dry weight of the said mineral matter.

17. A method, according to one of the claims 1 to 16, **characterised in that** use is made of between 0.1 and 1 mg, and preferentially between 0.2 and 0.6 mg, total dry equivalent, of the said glycerol and all possible agents for each m² of mineral matter.

18. A method, according to one of the claims 1 to 17, **characterised in that** the said mineral matter has a percentage by weight of particles having a diameter of less than 2 µm, measured by a Sedigraph^{™} 5100, of between 5% and 90%, preferentially between 10% and 60% at the supply of the air classifier in step d).

19. A method, according to one of the claims 1 to 18, **characterised in that** the said mineral matter of step a) is a natural calcium carbonate.

20. A method, according to one of the claims 1 to 19, **characterised in that** step d) of air sizing is a sizing using a sieve and/or a cyclone device.

21. A method, according to one of the claims 1 to 20, **characterised in that** step d) comprises at least two steps of sizing undertaken in series or in parallel, and preferentially comprises three to ten sizing steps.

22. A process according to one of the claims 1 to 21, **characterised in that** it is a continuous method.
